Europäisches Patentamt

(19) European Patent Office

Office européen des brevets

(11) EP 0 604 228 B1

## (12) EUROPEAN PATENT SPECIFICATION

(45) Date of publication and mention
of the grant of the patent:
**11.06.1997 Bulletin 1997/24**

(51) Int. Cl.⁶: **B60C 9/22**, B60C 9/00

(21) Application number: **93310458.0**

(22) Date of filing: **23.12.1993**

(54) **Pneumatic tyre**

Luftreifen

Bandage pneumatique

(84) Designated Contracting States:
**DE GB**

(30) Priority: **25.12.1992 JP 359443/92**

(43) Date of publication of application:
**29.06.1994 Bulletin 1994/26**

(73) Proprietor: **Sumitomo Rubber Industries Limited
Kobe-shi, Hyogo-ken (JP)**

(72) Inventor: **Kawamura, Kazuhiko
Akashi-shi, Hyogo-ken (JP)**

(74) Representative: **Stewart, Charles Geoffrey
SP TYRES UK LIMITED
Technical Division
Fort Dunlop, Erdington, Birmingham B24 9QT
(GB)**

(56) References cited:
**EP-A- 0 331 501          EP-A- 0 403 420
EP-A- 0 515 178**

• **PATENT ABSTRACTS OF JAPAN vol. 16, no. 157
(M-1236)16 April 1992 & JP-A-04 008 605
(SUMITOMO RUBBER IND. LTD.) 13 January
1992**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a belted pneumatic tyre, in which belt durability and steering stability are greatly improved.

In general, radial tyres are provided with a breaker or belt for reinforcing the tyre tread portion. For such breaker belts, a compact cord having a 1X3 structure has been widely used.

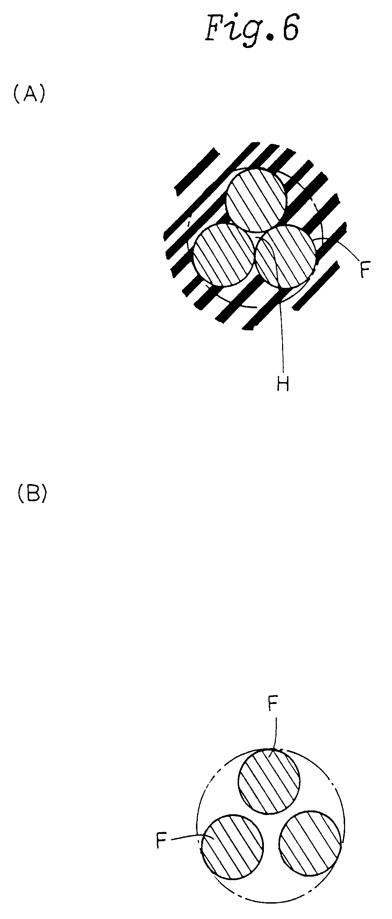

As shown in Fig.6A, such a compact cord consists of three steel monofilaments which are twisted together compactly. That is, no gap is formed between the adjacent filaments. Therefore, a closed space H is formed at the centre of the cord, and topping rubber can not penetrate into this central space H. As a result, the part of the surface of each monofilament adjacent to this central space H is not covered by the topping rubber.

Uncovered parts are easily corroded by any water which penetrates the tyre tread portion due to damage, and then corrosion is liable to spread quickly through the space H, which greatly reduces the tyre durability.

In order to avoid such exposure of the steel monofilament surface, a loose or open cord has been proposed, wherein the steel monofilaments F are loosely twisted together, as shown in Fig.6B. In such a cord the penetration of topping rubber is improved and the surfaces of the filaments can be covered more easily by the topping rubber because, when the cord tension is small, the gaps between the filaments are sufficiently large for the topping rubber to easily penetrate the cord.

However, because of the very large elongation of such a loose cord under a small load, when such loose cords are assembled in a raw tyre to provide a breaker belt and the tyre is subsequently pressurised in the vulcanising process, the breaker belt tends to elongate or deform unevenly, which results in poor finished tyre uniformity and also a breaker belt rigidity which is decreased in the finished tyre.

A known tyre showing the features of the preamble of claim 1 is disclosed e.g. by EP-A-0 331 501.

As a result, steering stability, rolling resistance, tyre life and the like are greatly decreased.

Furthermore, if a tension is applied to the loose cord during rubberising of the cord, the gaps between the filaments becomes narrow or closed, which then causes the same problems of lack of rubber penetration as in the original closed cord case.

It is therefore, an object of the present invention to provide a pneumatic tyre, in which the above-mentioned problems can be solved by improving the penetration of rubber into the breaker belt cords.

According to one aspect of the present invention, a pneumatic tyre comprises a carcass extending between bead portions of the tyre, and a belt disposed radially outside the carcass in a tread portion of the tyre, the belt comprising a breaker belt and a bandage belt disposed radially outside the breaker belt, the breaker belt comprising at least one ply of steel cords embedded in topping rubber at an angle (theta) with respect to the tyre equator, the bandage belt comprising at least one ply of at least one organic fibre cord spirally wound around the breaker belt at an angle of 0 to 3 degrees with respect to the tyre equator, each of the breaker belt cords consisting of three steel monofilaments including a waved steel monofilament and an unwaved steel monofilament, the three steel monofilaments being compactly twisted together so as to make alternate contacting portions and noncontacting portions between the waved steel monofilament and the unwaved steel monofilament, the noncontacting portions having a gap (T) being not more than 0.6 times the diameter (d) of the steel monofilaments, the or each bandage belt cord having an elasticity such that the elongation under a tension of 2.25 gram/denier is in the range of from 2.5 to 4.5 %.

An embodiment of the present invention will now be described, by way of example only, in conjunction with the accompanying drawings, in which:

Fig.1 is a cross sectional view of a tyre according to the present invention;
Fig.2 is a perspective view of a cord used for the breaker belt thereof;
Fig.3 is a cross sectional view of an opened part of the breaker belt cord;
Fig.4A is a plan view of a waved monofilament used in the breaker belt cord;
Fig.4B is a plan view of an unwaved monofilament used in the breaker belt cord;
Fig.5 is a perspective view of a ribbon of rubber in which breaker belt cords are embedded;
Fig.6A is a cross sectional view of a prior art closed breaker belt cord; and
Fig.6B is a cross sectional view of an open or loose prior art breaker belt cord.

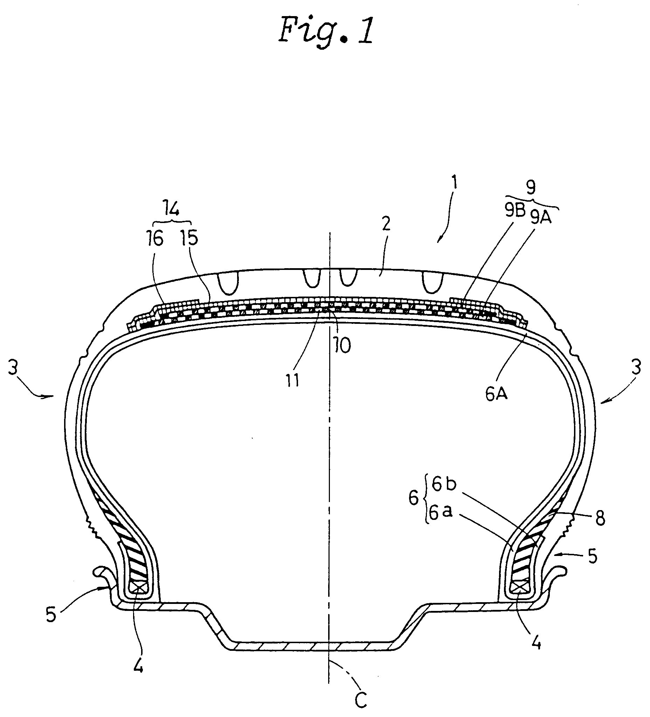

In Fig.1, a pneumatic tyre 1 has a tread 2, a pair of bead portions 5, and a pair of sidewalls 3 extending between the tread edges and the bead portions 5. A bead core 4 is disposed in each bead portion 5, a carcass 6 extends between the bead portions 5 being turned up around each bead core 4 to form a carcass turned up portion 6b and a main carcass portion 6a, and belt reinforcements 9 and 14 are disposed radially outside the carcass 6 under the tread 2.

The carcass 6 comprises at least one ply 6A of cords laid at 75 to 90 degrees with respect to the tyre equator.

Between the main carcass portion 6a and each of the turned up portions 6b, a bead apex 8 made of hard rubber is disposed. The bead apexes 8 extend taperingly radially outwardly from the bead cores 4 to reinforce the bead portion 5 and lower sidewall 3 and thus to increase the lateral stiffness of the tyre.

The carcass 6 in this embodiment is composed of one ply 6A of nylon fibre cords. For the carcass, organic fibre cords, e.g. polyester, rayon, aromatic polyamide or the like, are preferably used. However, steel cords can be used.

The belt reinforcements include a breaker belt 9 and a bandage belt 14 disposed radially outside the breaker belt 9.

In this embodiment, the breaker belt 9 consists of two breaker belt plies 9A and 9B. The radially inner breaker belt ply 9A disposed on the carcass 6 is wider than the radially outer breaker belt ply 9B disposed on the inner breaker belt ply 9A. The breaker belt 9 as a whole has enough width to reinforce the whole width of the tread 2.

Each of the breaker belt plies 9A and 9B is made of parallel cords 10 embedded in topping rubber 11 and laid at an angle (theta) from 0 to 35 degrees with respect to the tyre equator, the two plies being arranged such that the cords in the inner breaker belt ply 9A cross the cords in the outer breaker belt ply 9B.

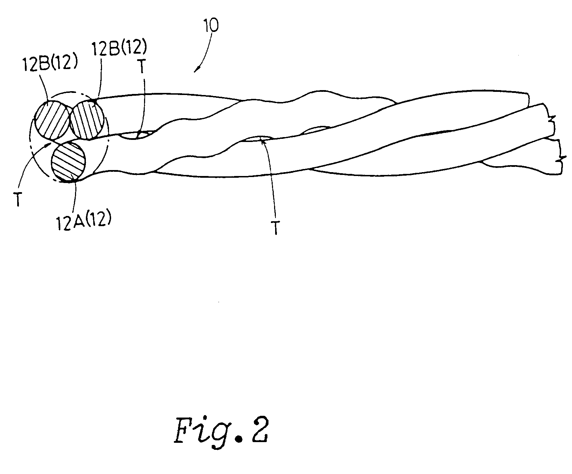

In the present invention, each of the breaker belt cords 10 consists of three steel monofilaments 12 which are twisted together as shown in Fig.2, wherein at least one of the three steel monofilaments is waved, and at least one of the remaining two steel monofilaments is not waved.

Preferably, the breaker belt cord 10 is composed of one waved monofilament 12A and two unwaved monofilaments 12B.

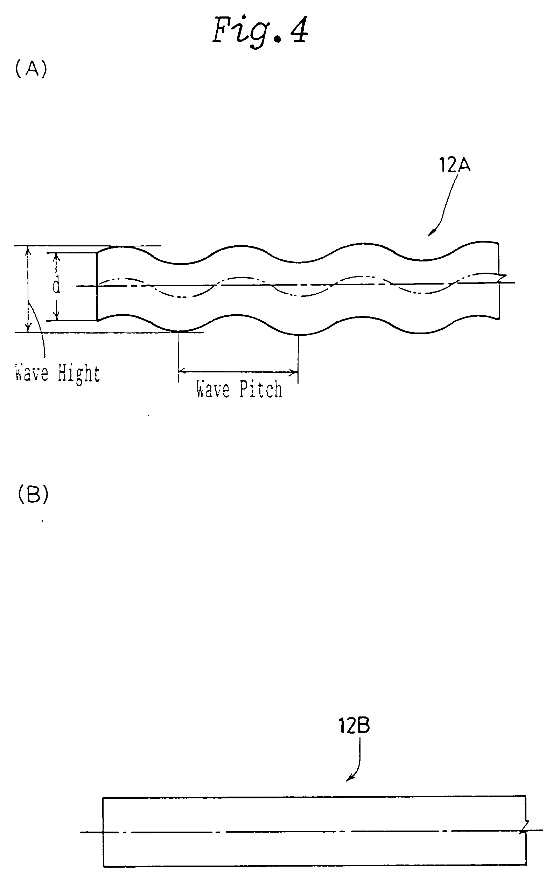

Fig.4A and Fig.4B show a waved monofilament 12A and an unwaved monofilament 12B, respectively, before they are twisted into a cord. As shown in Fig.4A, the waved monofilament 12A is waved in advance. As shown in Fig.4B, the unwaved monofilament 12B is straight.

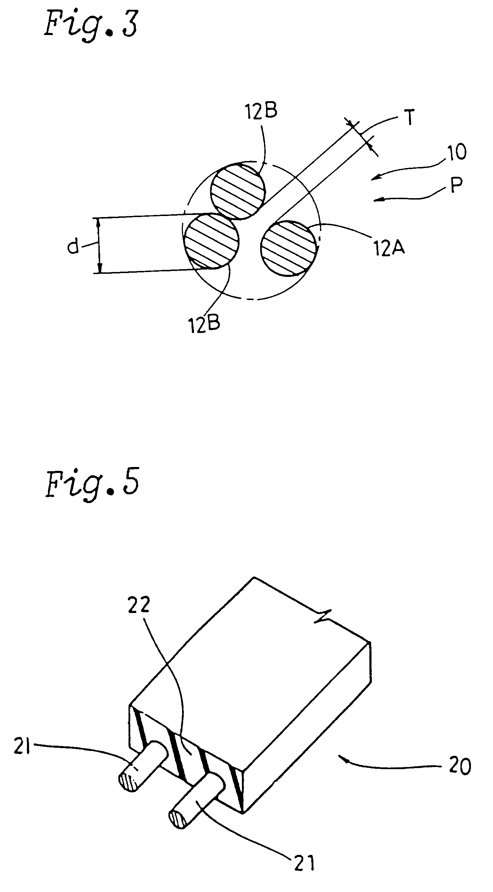

Accordingly, when they are twisted together as shown in Fig.2 and Fig.3, the resultant breaker belt cord 10 has regions of no inter-filament contact, i.e. non-contacting portions P between the adjacent waved monofilament 12A and unwaved monofilament 12B. These occur along the length of the cord. Thus many openings or gaps T are formed, through which topping rubber may penetrate the central space of the cord.

Before twisted into a cord, the waved monofilament 12A can be waved two-dimensionally by bending a straight monofilament in a flat plane at small pitches. Alternatively, the waved monofilament 12A can be waved three-dimensionally by, for example, coiling a straight monofilament at a small diameter and small pitches.

The wave pitches are preferably 0.31 to 0.70 times the final cord twist pitches. The wave height (peak to peak) of the waved monofilament 12A is preferably 1.5 to 2.5 times the diameter (d) of the monofilament 12A.

Generally, the diameters of the three monofilaments 12A and 12B are the same value (d), but they may be different.

In the present invention, the waved monofilament 12A and the unwaved monofilament 12B are twisted compactly so that the adjacent monofilaments generally contact each other. Accordingly, the elongation of the final cord is substantially smaller than that of the loose cord of the prior art.

The above mentioned gaps T at the noncontacting portions P is not more than 0.6 times the filament diameter d.

In order to best improve steering stability and tyre uniformity, it is preferable that the elongation of the breaker belt cord 10 when tested at a 5 kgf load is less than 0.3%.

To achieve this and to provide the necessary strength for the breaker belt, the diameter (d) of the steel monofilaments 12A and 12B is in the range from 0.20 to 0.35 mm, and more preferably 0.25 to 0.28 mm.

The above-mentioned pitch of the waves is less than the cord twist pitch.

The rubber compound used as the topping rubber 11 preferably has a complex elastic modulus $E^*$ of 45 to 150 kgf/cm$^2$. Here, the complex elastic modulus $E^*$ is measured under the following conditions: 10% initial strain, 10 Hz sine wave with 2% amplitude, and at a temperature of 70 degrees C, using a test piece (4 mm width, 30 mm length, and 2 mm thickness), by a visco-elasticity spectrometer manufactured by IWAMOTO SEISAKUSYO.

If the complex elastic modulus $E^*$ is less than 45 kgf/cm$^2$, the breaker belt rigidity becomes insufficient for steering stability, and the cut resistance of the breaker belt cords during sharp cornering is decreased. If the complex elastic modulus $E^*$ is more than 150 kgf/cm$^2$, it becomes difficult for the topping rubber to penetrate the cord.

Further, the buckling strength coefficient K of each of the breaker belt plies is more than 80 and less than 180. Here, the buckling strength coefficient K is defined by the cord count M per 5cm width divided by sine (theta). The angle (theta) is the breaker belt cord angle with respect to the tyre equator.

The cord count M in this embodiment is in the range of from 38 to 45 cords/5cm.

If the buckling strength coefficient K is not more than 80, the cut resistance of the breaker belt cord during sharp cornering and the steering stability are deteriorated. If the buckling strength coefficient K is not less than 180, ride comfort is deteriorated, and the tyre weight is excessive.

The above-mentioned bandage belt 14 is composed of at least one spiral cord ply.

In this embodiment, the bandage belt 14 consists of a wide bandage ply 15 and a pair of narrow edge bandage plies 16.

The wide bandage ply 15 is wound on the breaker belt 9, and the width thereof is substantially the same or more than the width of the breaker belt 9 so as to cover the whole width of the breaker belt.

The edge bandage plies 16 are wound around radially outside of the edge portions of the breaker belt 9, in this embodiment, on the wide bandage ply 15.

Each of the bandage plies 15 and 16 is formed by spirally winding a single cord or a plurality of parallel cords 21.

In this embodiment, two parallel cords 21 which are embedded in a topping rubber 22 in a form of a rubber ribbon 20 or long strip as shown in Fig.5, are used.

In order to form the above-mentioned bandage plies 15 and 16, the ribbon 20 is wound around radially outside of the breaker belt 9 double in each belt edge portion and single therebetween.

The or each belt cord 21 in each of the bandage plies is inclined at an angle of from 0 to 3 degrees with respect to the tyre equator C.

The bandage belt cords 21 have such elasticity that the elongation E is 2.5 to 4.5 %, where

$$E = (L1-L0)/L0 \times 100 \%,$$

L0 is a unit length of the cord at no load, and
L1 is the above-mentioned unit length of the cord elongated by applying a load of 2.25 gram/denier.

Thus, the elongation of the bandage belt cord 21 is greatly decreased in comparison with conventional organic fibre cords for bandage belts of which the elongation is about 7 to 10 %.

If the elongation is less than 2.5%, the tread portion is excessively increased in rigidity, and ride comfort is disturbed. If the elongation is more than 4.5%, the tread rigidity can not be increased, and the steering stability is deteriorated.

Here, the elongation is measured according to the JIS-L1017 method. For the unit "denier", the nominal denier of the cord is used. For example, the total nominal denier of a 1500d/2 polyester cord is 3000, and a 1260d/2 nylon cord is 2520. Accordingly, the load for a 1500d/2 polyester cord is 6.75 kg, and a 1260d/2 nylon cord is 5.67 kg.

While it is inevitable that the breaker belt rigidity is somewhat decreased by employing such a cord including a waved monofilament in comparison with a conventional compact cord of which three filaments are contact each other along the whole length thereof, the above-mentioned bandage belt 14 not only compensates for the decrease in the breaker rigidity but also increases the belt rigidity as a whole.

Further, the bandage belt 14 is the radially outermost belt having no joint in the circumferential direction of the tyre.

Therefore, high speed performance such as high speed steering stability, high speed durability and the like are effectively improved. Further, the steel cords are protected.

Test tyres of size 195/70R14 having the structure shown in Fig.1 and specifications given in Table 1 were prepared and tested for steering stability, ride comfort, and high speed durability of the tyre and cut resistance of the breaker belt cords. The test results are also given in Table 1.

The steering stability and ride comfort were evaluated by a test driver into five ranks, wherein the rank three is standard. The larger the value, the better the performance.

The high speed durability was evaluated, using a drum tester, by the running distance until a failure such as cracks was caused during running at a speed of 130 kilometre/hour. The results are indicated by an index based on the assumption that Reference tyre 1 is 100. The larger the value, the better the durability.

The cut resistance was evaluated by the cord cut caused in the breaker belt by sharp cornering of the test car. The results are indicated by an index based on the assumption that Reference tyre 2 is 100. The large the index, the better the resistance.

In the above-mentioned wide bandage ply 15, the cord or cords 21 can be wound continuously from one edge to the other edge thereof, but it is also possible to wind discontinuously so as to divide the ply into a plurality of sections in the axial direction of the tyre.

Further, in case of a plurality of sections, the structure may be different from one another, for example, dividing into two pieces at the tyre equator, and reversing the spiral winding directions or the cord angles.

Furthermore, the bandage belt 14 can be composed of only two wide plies 15.

TABLE 1

| | Ref.1 | Ref.2 | Ref.3 | Ex.1 | Ex.2 | Ex.3 | Ex.4 |
|---|---|---|---|---|---|---|---|
| BREAKER BELT | | | | | | | |
| Ply | | | | | | | |
| No. of ply | 2 | 2 | 2 | 2 | 2 | 2 | 2 |
| Structure | Fig.1 | Fig.1 | Fig.1 | Fig.1 | Fig.1 | Fig.1 | Fig.1 |
| Cord count (/5cm) | 35 | 40 | 45 | 40 | 40 | 40 | 40 |
| Buckling strength coefficient | 117 | 133 | 150 | 133 | 133 | 133 | 133 |
| Steel cord | | | | | | | |
| Dia. of filaments (mm) | 0.25 | 0.27 | 0.27 | 0.27 | 0.27 | 0.27 | 0.27 |
| No. of Waved filament | 0 | 1 | 1 | 1 | 1 | 1 | 1 |
| No. of Unwaved filament | 5 | 2 | 2 | 2 | 2 | 2 | 2 |
| Topping rubber | | | | | | | |
| Complex elastic modulus | 68 | 68 | 68 | 68 | 68 | 68 | 68 |
| BANDAGE BELT | | | | | | | |
| Ply | | | | | | | |
| Structure *1 | W+E Fig.1 | W+E Fig.1 | W+E Fig.1 | W+E Fig.1 | W+E Fig.1 | W+E Fig.1 | W |
| Cord count (/5cm) | 50 | 50 | 50 | 50 | 50 | 40 | 50 |
| Organic cord | | | | | | | |
| Material *2 | nylon | nylon | nylon | PE | PE | PE | PE |
| Structure | 1260d/2 | 1260d/2 | 1260d/2 | 1500d/2 | 1000d/2 | 1500d/2 | 1500d/2 |
| Cord elongation E (%) | 8.5 | 8.5 | 8.5 | 3.8 | 3.8 | 3.8 | 3.8 |
| Test Results | | | | | | | |
| Steering stability | 3.4 | 2.9 | 3.2 | 3.4 | 3.2 | 3.4 | 3.2 |
| Ride comfort | 3.0 | 3.2 | 3.0 | 3.0 | 3.2 | 3.0 | 3.0 |
| High speed durability | 100 | 100 | 100 | 120 | 110 | 120 | 100 |
| Cut resistance | 125 | 100 | 100 | 120 | 110 | 120 | 120 |

*1) W: a single wide ply
E: a pair of axially spaced edge plies
*2) PE: polyester

**Claims**

1. A pneumatic tyre comprising a carcass (6) extending between bead portions (5) of the tyre (1), and a belt disposed radially outside the carcass in a tread portion (2) of the tyre (1), said belt comprising a breaker belt (9) and a bandage belt (14) disposed radially outside the breaker belt (9), said breaker belt (9) comprising at least one ply (9A,9B) of steel cords (10) embedded in topping rubber (11) at an angle (theta) with respect to the tyre equator, said bandage belt (14) comprising at least one ply (15,16) of at least one organic fibre cord spirally wound around said breaker belt (9) at an angle of 0 to 3 degrees with respect to the tyre equator, characterised in that each said breaker belt cord (10) consists of three steel monofilaments (12) including a waved steel monofilament (12A) and an unwaved steel monofilament (12B), said three steel monofilaments (12A,12B) are compactly twisted together so as to make alternate contact portions and noncontacting portions between said waved steel monofilament (12A) and said unwaved steel monofilament (12B), said noncontacting portions has a gap (T) being not more than 0.6 times the diameter (d) of the steel monofilaments (12A,12B), the or each bandage belt cord has and elasticity such

EP 0 604 228 B1

that the elongation under a tension of 2.25 gram/denier is in the range of from 2.5 to 4.5 %.

2. A pneumatic tyre according to claim 1, characterised in that said diameter (d) of the steel monofilaments (12) is in the range of from 0.2 to 0.35 mm.

3. A pneumatic tyre according to claim 1 or 2, characterised in that the elongation of each said breaker belt cord under a tension of 5 kgf is not more than 0.3%.

4. A pneumatic tyre according to claim 1, 2 or 3, characterised in that said topping rubber (11) for the breaker belt cords (12) has a complex elastic modulus of 45 to 150 kgf/cm$^2$.

5. A pneumatic tyre according to any of claims 1 to 5, characterised in that the buckling strength coefficient of the or each breaker belt ply is more than 80 and less than 180, said buckling strength coefficient being defined as the breaker belt cord count per 5cm width of the breaker belt ply divided by sine (theta).

**Patentansprüche**

1. Pneumatischer Reifen umfassend eine Karkasse (6), die sich zwischen Wulstabschnitten (5) des Reifens (1) erstreckt, und einen Gürtel, der radial außerhalb der Karkasse in einem Laufflächenabschnitt (2) des Reifens (1) angeordnet ist, wobei der Gürtel einen Breakergürtel (9) und einen Bandagengürtel (14) umfaßt, der radial außerhalb des Breakergürtels (9) angeordnet ist, wobei der Breakergürtel (9) mindestens eine Einlage (9A, 9B) aus Stahlcorden (10) umfaßt, die unter einem Winkel (Theta) bezogen auf den Reifenäquator in Überzugsgummi (11) eingebettet sind, der Bandagengürtel (14) mindestens eine Einlage (15, 16) aus mindestens einem organischen Fasercord umfaßt, der spiralförmig um den Breakergürtel (9) unter einem Winkel von 0 bis 3 Grad bezogen auf den Reifenäquator herum gewickelt ist, dadurch gekennzeichnet, daß jeder Breakergürtelcord (10) aus drei Stahlmonofasern (12) besteht, die eine gewellte Stahlmonofaser (12A) und eine nicht-gewellte Stahlmonofaser (12B) aufweisen, wobei die drei Stahlmonofasern (12A, 12B) kompakt zusammen verdreht sind, um alternierende Berührungsabschnitte und nicht-berührende Abschnitte zwischen der gewellten Stahlmonofaser (12A) und der nicht-gewellten Stahlmonofaser (12B) zu schaffen, wobei die nicht-berührenden Abschnitte einen Zwischenraum (T) aufweist, der nicht mehr als 0,6 mal des Durchmessers (d) der Stahlmonofasern (12A, 12B) beträgt, der oder jeder Bandagengürtelcord eine derartige Elastizität aufweist, daß die Dehnung unter einer Spannung von 2,25 Gramm/Denier in dem Bereich von 2,5 bis 4,5 % liegt.

2. Pneumatischer Reifen nach Anspruch 1, dadurch gekennzeichnet, daß der Durchmesser (d) der Stahlmonofasern (12) in dem Bereich von 0,2 bis 0,35 mm liegt.

3. Pneumatischer Reifen nach Anspruch 1 oder 2, dadurch gekennzeichnet, daß die Dehnung jedes Breakergürtelcords unter einer Spannung von 5 kgf nicht mehr als 0,3 % beträgt.

4. Pneumatischer Reifen nach Anspruch 1, 2 oder 3, dadurch gekennzeichnet, daß der Überzugsgummi (11) für die Breakergürtelcorde (12) einen komplexen Elastizitätsmodul von 45 bis 150 kgf/cm$^2$ aufweist.

5. Pneumatischer Reifen nach einem der Ansprüche 1 bis 5, dadurch gekennzeichnet, daß der Knickfestigkeitskoeffizient der oder jeder Breakergürteleinlage mehr als 80 und weniger 180 beträgt, wobei der Knickfestigkeitskoeffizient als die Breakergürtelcordzahl pro 5 cm Breite der Breakergürteleinlage geteilt durch Sinus (Theta) definiert ist.

**Revendications**

1. Pneumatique comprenant une carcasse (6) disposée entre des parties (5) de talon du pneumatique (1), et une ceinture disposée radialement à l'extérieur de la carcasse dans une partie de bande de roulement (2) du pneumatique (1), la ceinture comprenant une ceinture de nappe-sommet (9) et une ceinture de bandage (14) disposée radialement à l'extérieur de la ceinture de nappe-sommet (9), la ceinture de nappe-sommet (9) comprenant au moins une nappe (9A, 9B) de câblés d'acier (10) enrobés dans un caoutchouc d'enrobage (11) et formant un angle (θ) avec l'équateur du pneumatique, la ceinture de bandage (14) comportant au moins une nappe (15, 16) d'au moins un câblé de fibres organiques enroulé en spirale autour de la ceinture de nappe-sommet (9) avec un angle de 0 à 3° par rapport à l'équateur du pneumatique, caractérisé en ce que chaque câblé (10) de ceinture de nappe-sommet est constitué de trois monofilaments d'acier (12) contenant un monofilament ondulé d'acier (12A) et un monofilament non ondulé d'acier (12B), les trois monofilaments d'acier (12A, 12B) sont retordus de manière serrée afin qu'ils forment en alternance des parties de contact et des parties sans contact entre le monofilament ondulé (12A) et le monofilament non ondulé (12B) d'acier, les parties sans contact ont un espace (T) qui ne dépasse pas 0,6 fois le diamètre (d) des monofilaments d'acier (12A, 12B), et le câblé ou chaque câblé de ceinture de bandage possède une élasticité telle que l'allongement sous une tension de 22,5 mN (2,25 g) par denier est compris entre 2,5 et 4,5 %.

2. Pneumatique selon la revendication 1, caractérisé en ce que le diamètre (d) des monofilaments d'acier (12) est compris entre 0,2 et 0,35 mm.

3. Pneumatique selon la revendication 1 ou 2, caractérisé en ce que l'allongement de chaque câblé de ceinture de nappe-sommet sous une force de traction de 50 N (5 kgf) ne dépasse pas 0,3 %.

4. Pneumatique selon la revendication 1, 2 ou 3, caractérisé en ce que le caoutchouc d'enrobage (11) des câblés (12) de ceinture de nappe-sommet a un module complexe d'élasticité compris entre 4,5 et 15 MPa (45 à 150 kgf/cm$^2$).

5. Pneumatique selon l'une quelconque des revendications 1 à 5, caractérisé en ce que le coefficient de résistance au gondolement de la nappe ou de chaque nappe de ceinture de nappe-sommet est supérieur à 80 et inférieur à 180, le coefficient de résistance au gondolement étant défini comme étant le nombre de câblés de ceinture de nappe-sommet par fraction de 5 cm de largeur de la nappe de ceinture de nappe-sommet divisé par sin($\theta$).

## Fig.1

Fig.2

*Fig.3*

*Fig.5*

# Fig.4

(A)

12A

d

Wave Hight

Wave Pitch

(B)

12B

# Fig.6

(A)

(B)